Europäisches Patentamt

(19) European Patent Office

Office européen des brevets

(11) Veröffentlichungsnummer: **0 085 420**
**B1**

(12) **EUROPÄISCHE PATENTSCHRIFT**

(45) Veröffentlichungstag der Patentschrift:
27.12.85

(51) Int. Cl.⁴: **G 01 N 1/06**

(21) Anmeldenummer: **83100839.6**

(22) Anmeldetag: **29.01.83**

(54) **Kryostatmikrotom.**

(30) Priorität: **03.02.82 DE 8202647 U**

(43) Veröffentlichungstag der Anmeldung:
**10.08.83 Patentblatt 83/32**

(45) Bekanntmachung des Hinweises auf die Patenterteilung:
**27.12.85 Patentblatt 85/52**

(84) Benannte Vertragsstaaten:
**AT CH DE FR GB IT LI SE**

(56) Entgegenhaltungen:
**DE - A - 2 328 298**
**DE - A - 3 036 852**
**DE - B - 1 234 045**
**US - A - 3 233 965**
**US - A - 4 284 894**

(73) Patentinhaber: **PARKE, DAVIS & COMPANY, 201 Tabor Road, Morris Plains New Jersey 07950 (US)**

(72) Erfinder: **Mössner, Gerhard, Nadlerstrasse 11, D-6907 Nussloch (Heidelberg) (DE)**

(74) Vertreter: **LOUIS, PÖHLAU, LOHRENTZ & SEGETH, Kesslerplatz 1 P.B. 3055, D-8500 Nürnberg (DE)**

BUNDESDRUCKEREI BERLIN

**Beschreibung**

Die Erfindung bezieht sich auf ein Kryostatmikrotom mit einer durch ein Kälteaggregat auf eine vorbestimmte Temperatur einstellbaren Kühltruhe, die auf einem Ständer aufgenommen ist, und mit einem in dieser Kühltruhe angeordneten Mikrotom.

Kryostatmikrotome dieser Art, bei denen die Mikrotome innerhalb einer wärmegedämmten Kühltruhe aufgenommen sind und bei denen keine oder nur eine äußerst geringe Reifbildung bei der Bearbeitung von Objekten vorkommt, gehören seit langem zum allgemein bekannten Stand der Technik. Dabei sind die Kühltruhen mit den integrierten Mikrotomen auf Ständern in einer Höhelage angeordnet, die entweder die Bedienung durch eine sitzende oder eine stehende Bedienungsperson ermöglicht.

Mikrotome sind Präzisionsapparate zur Herstellung sehr dünner Schnitte (1 – 15 μm) von gehärteten oder gefrorenen Geweben und dienen besonders der Herstellung sogenannter Serienschnitte, d. h. Schnitte mit lückenloser Schnittfolge. Die Arbeit mit solchen Mikrotomen verlangt hohe Aufmerksamkeit und Konzentration, weshalb es notwendig ist, das Mikrotom in die bestmögliche Position in bezug auf die Bedienungsperson zu bringen.

Ein Kryostatmikrotom der eingangs genannten Art ist aus der US-A-3 233 965 bekannt. Bei diesem Kryostatmikrotom ist die auf einem Ständer aufgenommene Kühltruhe örtlich unveränderbar angeordnet, so daß das in der Kühltruhe vorgesehene Mikrotom sich stets auf derselben Höhe befindet. Diese Anordnung des Mikrotoms auf einer konstanten Höhe ermöglicht entweder eine Bedienung desselben durch eine stehende oder durch eine sitzende Bedienungsperson. Es ist jedoch nicht möglich, das in der Kühltruhe befindliche Mikrotom sowohl stehend als auch sitzend gleich gut und gleich einfach bedienen zu können.

Aus der DE-A-3 036 852 ist eine Vorrichtung zum Aufstellen eines Datensichtgerätes auf einer Arbeitsfläche bekannt. Bei dieser Vorrichtung werden am Datensichtgerät selbst keine Manipulationen vorgenommen. Die in der Höhe veränderbare Ausbildung des Ständers dieser Vorrichtung dient dazu, das Datensichtgerät in einer solchen Position anzuordnen, daß es gut und ermüdungsfrei abgelesen werden kann.

Das Ziel der Erfindung besteht insofern in der Ausbildung eines Kryostatmikrotoms dahingehend, daß dieses von einer Bedienungsperson sitzend oder stehend bedient und auch problemlos den individuell unterschiedlichen Bedürfnissen verschieden großer Bedienungspersonen in einfacher Weise sowie stufenlos angepaßt werden kann.

Ausgehend von einem Kryostatmikrotom der eingangs angegebenen Gattung wird diese Aufgabe erfindungsgemäß dadurch gelöst, daß die Kühltruhe mit dem Mikrotom auf dem Ständer höheneinstellbar aufgenommen ist, wobei der Ständer aus einem Fußrahmen und einem mit diesem sowie mit der Kühltruhe verbundenen Gestell aus relativ zueinander bewegbaren Bauteilen besteht, daß der Fußrahmen lotrechte Stützen trägt, und daß wenigstens zwei an einander gegenüberliegenden Seiten des Fußrahmens angeordnete Stützen als um ihre Längsachse drehbare Gewindespindeln ausgebildet sind, die mit von der Bodenfläche der Kühltruhe beabstandeten, mit der Kühltruhe starr verbundenen Gewindemuffen in Eingriff sind und an ihrem unteren Ende die Gewindespindeln gleichzeitig in Umdrehung versetzende Antriebsräder tragen.

Durch die höhenverstellbare Anordnung gelingt es in einfacher Weise, sowohl für sitzende wie auch für stehende Bedienung dadurch optimale Arbeitsbedingungen zu schaffen, daß die Kühltruhe mit dem darin aufgenommenen Mikrotom in einer der Körpergröße der jeweiligen Bedienungsperson entsprechenden Höhe entweder für sitzende oder für stehende Bedienung eingestellt wird und, falls gewünscht, auch jederzeit während der Arbeit verstellt werden kann.

Vorzugsweise wird der Fußrahmen als rechtwinkliges Viereck, sei es ein Quadrat, sei es ein Rechteck, ausgebildet, dessen Oberfläche einen Abstand zur unteren Auflagerfläche hat und somit wenigstens einen Hohlraum, der bevorzugterweise von von der Oberfläche nach unten verlaufenden Seitenwänden umschlossen ist, bildet, in welchem Antriebsglieder für die Höhenverstellung der Kühltruhe aufgenommen werden können. Der Fußrahmen kann aus vier Hohlprofilen (Rund- oder Vierkantmaterial) gebildet werden, deren Hohlräume jedoch untereinander Verbindung haben sollen.

Zur Lagerung der Kühltruhe trägt der Fußrahmen vorzugsweise vier lotrechte Stützen, die im Quadrat bzw. Rechteck angeordnet sind und an denen mit der Kühltruhe verbundene Bauteile hin- und herbewegbar gelagert sind, wobei die Stützen und die an diesen bewegbaren Bauteile als Führungen bei der Auf- und Abbewegung der Kühltruhe dienen und auch als Antriebsmittel für die Kühltruhenbewegung dienen können.

Von den vier Stützen können — wenn diese als Antriebsmittel für die Kühltruhenbewegung dienen — wenigstens zwei als Gewindespindeln ausgebildet sein, mit denen dann zwei an der Kühltruhe befestigte Gewindemuffen in Eingriff sind, während die übrigen zwei Stützen lediglich als Führungen dienen. Um eine genügende Bewegungsfreiheit für die Kühltruhe zu erlangen, werden die Gewindemuffen mit ausreichendem Abstand zur Bodenfläche der Kühltruhe angeordnet, so daß selbst in der tiefsten Lage der Kühltruhe deren Bodenfläche nicht an den oberen Enden der Gewindespindeln zum Anstoßen kommen kann. Zum Antrieb der Gewindespindeln werden an deren unteren Enden Antriebsräder befestigt.

Diese Antriebsräder werden aus Gründen der Sicherheit und des Aussehens des Mikrotoms innerhalb des Fußrahmens angeordnet.

Der Fußrahmen trägt eine in ihrer Drehrichtung umkehrbare Antriebsquelle, z. B. einen Motor, eine Handkurbel od. dgl., deren Abtriebswelle mit den Antriebsrädern an den Spindeln antriebsseitig verbunden ist.

Wenngleich es als ausreichend angesehen werden kann, nur zwei Gewindespindeln für die Bewegung der Kühltruhe vorzusehen, wobei dann, um eine gleichmäßige Bewegung der Kühltruhe ohne das Risiko einer gewissen Schräglage sicherzustellen, diese Spindeln an zwei gegenüberliegenden Seiten der Kühltruhe bzw. des Fußrahmens angeordnet werden, so wird vorgezogen, alle vier Stützen als Gewindespindeln, die in zur Bodenfläche der Kühltruhe beabstandete Gewindemuffen eingreifen und mit Antriebsrädern verbunden sind, auszubilden. Um die quer zu den Längsachsen der Gewindespindeln angeordneten Antriebsräder wird dann ein mit der Abtriebswelle der Antriebsquelle verbundenes Übertragungselement geführt, das ein Keilriemen, Seilzug od. dgl. sein kann. Vorzugsweise werden jedoch die Antriebsräder an den Gewindespindeln und das Antriebsrad an der Abtriebswelle der Antriebsquelle als Kettenräder ausgebildet, die mit einer endlosen, über sämtliche Antriebsräder geführten Kette in Eingriff sind. Ein solcher Antrieb gewährleistet eine spielfreie Übertragung der Antriebskräfte und damit eine fein einregelbare Höhenverstellung der Kühltruhe des Mikrotoms.

Eine andere erfindungsgemäße Lösung ist im Anspruch 4 dargelegt.

Vorzugsweise werden auch in diesem Fall alle vier Stützen mit Zahnstangen versehen, in die dann auch vier Zahnräder eingreifen, um eine gleichmäßige, geradlinige Bewegung der Kühltruhe zu gewährleisten.

Die Antriebsquelle mit umkehrbarer Drehrichtung, die wieder von einem Motor, einer Kurbel od. dgl. gebildet sein kann, wird über Übertragungsglieder mit den zwei bzw. vier an den Zahnstangen der Stützen laufenden Zahnrädern gekoppelt. Hierbei werden, wenn vier Zahnräder vorhanden sind, je zwei auf der gleichen Seite des Fußrahmens angeordnete Zahnräder jeweils durch eine Antriebskette verbunden, während zwei von den auf gegenüberliegenden Seiten des Fußrahmens liegenden Zahnrädern durch eine Welle verbunden werden. Im Fall von nur zwei Zahnrädern an gegenüberliegenden Seiten des Fußrahmens genügt allein die Verbindung mit Hilfe der Welle, die Kettenantriebsverbindung kommt dabei in Fortfall.

Für die vier Zahnräder, die Antriebsquelle und die Übertragungsglieder kann ein Rahmen vorgesehen werden, der mit die auf dem Fußrahmen stehenden Stützen übergreifenden, an der Kühltruhe koaxial zu den Stützen befestigten Hülsen verbunden ist. Dieser Rahmen wird vorzugsweise vollkommen oder weitestgehend geschlossen ausgebildet, um die Möglichkeit einer Gefährdung der Bedienungsperson durch die sich bewegenden Antriebsglieder auszuschalten, um das Aussehen des Mikrotoms zu verbessern und um Verschmutzungen des Antriebs in aktiver Weise, z. B. durch Schmiermittel, wie in passiver Weise, z. B. durch Eindringen von Fremdkörpern, zu verhindern.

Eine dritte bevorzugte Möglichkeit für die stufenlose Verstellung der Höhe des Mikrotoms besteht in der Anordnung je einer zwischen den Fußrahmen und die Bodenfläche der Kühltruhe eingesetzten Gasdruckfeder auf gegenüberliegenden Seiten des Mikrotoms. Die Kraft dieser Gasdruckfeder, die vorzugsweise lotrecht angeordnet sein soll, wird um etwa 50 bis 100 N größer als die zu bewegende Masse der Kühltruhe gewählt.

Eine solche Feder kann auch bei den beiden vorher erläuterten Ausführungsformen zusätzlich — möglicherweise mit geringerer Eigenkraft — zur Anwendung kommen, wodurch der übrige Antrieb dann unter Umständen weniger robust auszubilden ist und die Betätigungskraft seitens der Bedienungsperson geringer sein kann.

Es kann von Vorteil sein — im Fall einer Höhenverstellung über Gasdruckfedern allein ist es unbedingt ins Auge zu fassen —, eine die Lage der Kühltruhe in der gewünschten Höhe festlegende Arretiervorrichtung vorzusehen.

Die Merkmale und weitere Vorteile des Erfindungsgegenstandes werden aus der folgenden, auf die Zeichnungen Bezug nehmenden Beschreibung von bevorzugten Ausführungformen deutlich. Es zeigt

Fig. 1 den grundsätzlichen Aufbau eines Kryostatmikrotoms in einem Längsschnitt durch die das Mikrotom aufnehmende und ihrerseits auf einem Ständer höhenverstellbar aufgenommene Kühltruhe,

Fig. 2 das Kryostatmikrotom in einer Seitenansicht bei einer Höheneinstellung für die Bedienung durch eine sitzende Person,

Fig. 3 eine Ansicht wie Fig. 2, wobei das Kryostatmikrotom in eine Höhe für die Bedienung durch eine stehende Person eingesetllt ist,

Fig. 4 eine Draufsicht auf den geöffneten Fußrahmen von Fig. 5,

Fig. 5 den Schnitt bzw. die Ansicht nach der Linie V-V in der Fig. 4,

Fig. 6 den Schnitt bzw. die Draufsicht nach der Linie VI-VI in der Fig. 7 und

Fig. 7 teils einen Längsschnitt, teils eine Ansicht in der Blickrichtung des Pfeiles A in der Fig. 6.

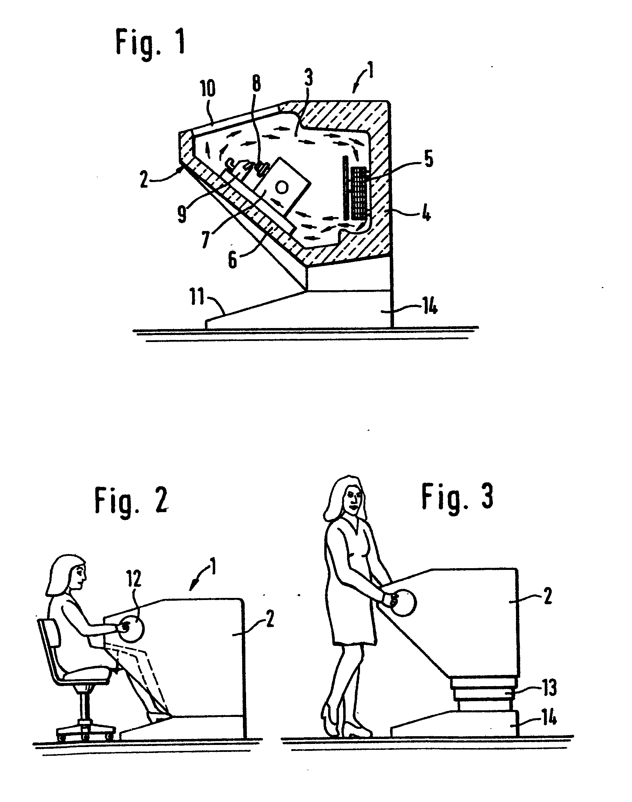

Das in seinem Aufbau aus Fig. 1 ersichtliche Kryostatmikrotom 1 besitzt eine auf einem Ständer höhenverstellbar aufgenommene, pultartig ausgebildete Kühltruhe 2. Die Wandungen der Kühltruhe sind, wie bei Kryostatmikrotomen üblich, gut wärmedämmend ausgebildet. Im Innenraum 3 der Kühltruhe befindet sich an deren Rückwand 4 ein nur schematisch angedeutetes Kälteaggregat 5, mit dem es gelingt, den Innenraum der Truhe auf eine vorbestimmte Temperatur einzustellen und diese dann weitgehend konstant zu halten. An einer von der Truhenrückwand 4 entfernten, vom Truhenboden schräg nach vorn und nach oben verlaufenden Vorderwand 6 ist im Innenraum der Truhe ein Mikrotom 7 angeordnet, dessen Objekthalter 8 und Messerträger 9 von einer obenliegenden Sichtöffnung 10 einsehbar sind, die eine abnehmbare Platte aufweist, um am Objekthalter und Messerträger Arbeiten ausführen zu können. Mittels der von dem Kälteaggregat 5 nach unten gerichteten und dann in einem durch die Pfeile angedeuteten Kreislauf innerhalb des Truhenraums 3 verlaufenden Luftzirkulation wird eine im wesentlichen gleichbleibende Temperatur im Raum 3 aufrechterhalten.

Die Seitenansicht von Fig. 2 zeigt das Kryostatmikrotom 1 in der gleichen Höheneinstellung wie in Fig. 1 zusammen mit einer auf einem Bedienungsstuhl sitzenden Bedienungsperson. Im Bereich der unteren Vorderwand ist die Kühltruhe mit einem durch eine gestrichelte Linie angedeuteten Freiraum für die Beine dieser Bedienungsperson versehen, und der die Truhe höhenverstellbar tragende Ständer besitzt eine Auflagefläche 11 (Fig. 1) für die Füße der Bedienungsperson. An der Seitenwand der Kühltruhe befindet sich ein nur schematisch angedeuteter Drehgriff 12 zum Betätigen des Mikrotoms 7.

In Fig. 3 ist die Kühltruhe 2 aus der in den Fig. 1 und 2 gezeigten unteren Stellung in eine obere Stellung verfahren, die der Bedienung durch eine stehende Person entspricht. Der Höhenverstellung der Kühltruhe dient ein in Fig. 3 nur schematisch angedeutetes Gestell 13. Zwischen den aus den Fig. 2 und 3 ersichtlichen Lagen und auch zu höherer Lage kann die Kühltruhe stufenlos in jeder beliebigen Höhe eingestellt und damit die Größe der jeweiligen Bedienungsperson sowie den jeweils auszuführenden Arbeitsvorgängen entsprechend angepaßt werden.

Der die Kühltruhe 2 tragende Ständer besteht aus einem Fußrahmen 14 und dem Gestell 13, das sowohl mit dem Fußrahmen als auch mit der Bodenfläche der Kühltruhe 2 verbunden ist und aus relativ zueinander bewegbaren Bauteilen, auf die noch näher eingegangen werden wird, gebildet ist.

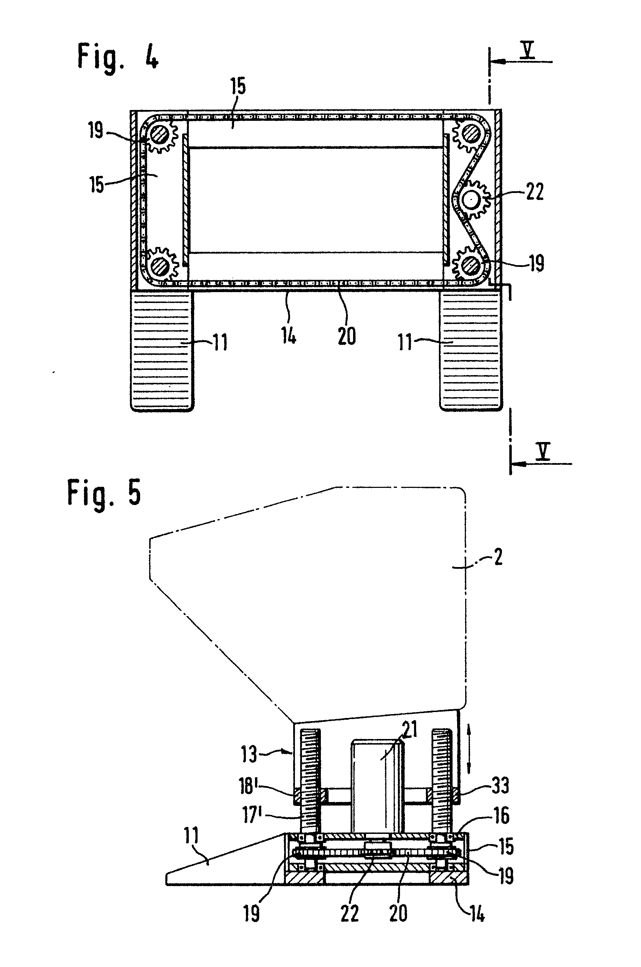

Der Fußrahmen 14 wird als rechtwinkliges Viereck ausgebildet — in den Fig. 4 bis 7 ist dieser Rahmen 14 rechteckig — und weist vorzugsweise einen Hohlraum, der von einer Abdeckplatte 16 und von von dieser nach unten ragenden Seitenplatten umschlossen ist, oder mehrere Hohlräume auf, die durch miteinander verschweißte Hohlprofile 15 bestimmt werden, wobei die Abdeckplatte 16 auch in diesem Fall den Fußrahmen 14 nach oben hin abschließt.

Mit dem Fußrahmen 14 sind vier lotrechte Stützen 17 fest verbunden, mit der Bodenfläche der Kühltruhe 2 sind Führungsglieder 18 verbunden, die koaxial zu den Stützen 17 angeordnet und längs dieser hin- und herbewegbar sind.

Bei der in den Fig. 4 und 5 gezeigten Ausführungsform sind die lotrechten Stützen als Gewindespindeln 17' und die Führungsglieder als Gewindemuffen 18' ausgebildet. Wenigstens zwei Gewindespindeln 17' sind an einander gegenüberliegenden Seiten des Fußrahmens 14 vorgesehen, vorzugsweise kommen jedoch vier solche Spindeln 17' — an jeder Ecke des Vierecks eine — zur Anwendung.

Die Gewindespindeln sind an ihren unteren, innerhalb der Hohlräume der Hohlprofile 15 liegenden Enden mit Antriebsrädern 19 versehen, die im Fall der Figuren 4 und 5 als Kettenräder ausgestaltet sind und die Gewindespindeln 17' in Umdrehung versetzen. Um die Kettenräder 19 ist eine endlose Antriebskette 20 geführt, die die Hohlräume sämtlicher Hohlprofile 15 durchsetzt, die zu diesem Zweck untereinander offen verbunden sind. Mit der Antriebskette 20 ist ein von einer Antriebsquelle 21 in Umdrehung versetztes Kettenrad 22 in Eingriff. Die Antriebsquelle 21 ist in Fig. 5 als Motor dargestellt, dessen Abtriebswelle das Kettenrad 22 trägt und der in seiner Drehrichtung umkehrbar ist. An die Stelle des Motors kann jede andere Antriebsquelle treten, über die das Kettenrad 22 gedreht wird.

Die Antriebsräder 19 und 22 sowie die diese umspannende Antriebskette 20 sind alle innerhalb des Fußrahmens 14 angeordnet, so daß sie selbst gegen Einflüsse von außen geschützt sind, andererseits aber keine Gefahr für eine Bedienungsperson darstellen können.

Bei Drehen der Antriebsquelle 21 in der einen oder anderen Richtung werden über das Kettenrad 22, die Kette 20 und die Antriebskettenräder 19 die Gewindespindeln 17' gedreht, die durch ihren Eingriff mit den Gewindemuffen 18', die in einer mit Abstand zur Bodenfläche der Kühltruhe 2 fest angeordneten Platte 33 gehalten sind, die Kühltruhe in der einen oder anderen Richtung, wie in Fig. 5 durch den lotrechten Doppelpfeil angedeutet ist, in ihrer Höhenlage verstellen.

Das Gestell 13 kann von einem Faltenbalg oder von einer teleskopartig verschiebbaren Schürze, wie in Fig. 3 angedeutet ist, verkleidet sein.

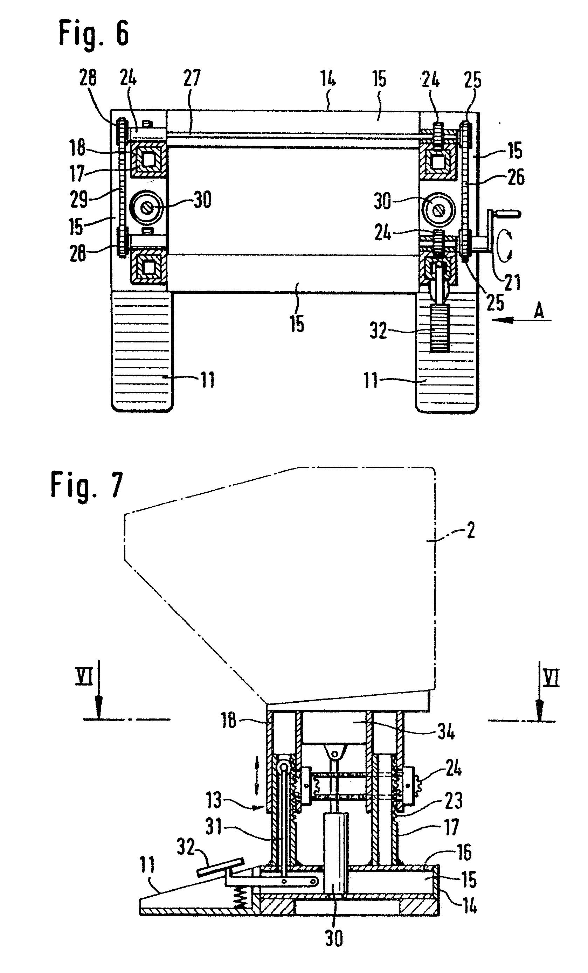

Bei den in den Fig. 6 und 7 gezeigten Ausführungsformen sind an gegenüberliegenden Seiten des Fußrahmens 14 wiederum wenigstens zwei lotrechte Stützen 17 — vorzugsweise jedoch alle vier Stützen — an ihrer Außenfläche mit parallel zur Stützenlängsachse verlaufenden Zahnstangen 23 versehen, in die an der Kühltruhe 2 mit Abstand zu deren Bodenfläche befestigte Zahnräder 24 eingreifen. Diese Zahnräder 24 werden von einer in ihrer Drehrichtung umkehrbaren Antriebsquelle 21, die hier als Handkurbel ausgebildet ist, angetrieben. Der Antriebsübertragung dienen Kettenräder 25, die über eine Kette 26 verbunden sind, eine Welle 27, die sich von der einen Seite des Fußrahmens 14 zur gegenüberliegenden Seite erstreckt, und Kettenräder 28, die wiederum über eine Kette 29 miteinander gekoppelt sind.

Die vier Zahnräder 24, die Kettenräder 25 sowie 28, die Ketten 26 sowie 29 und die Welle 27 werden vorteilhafterweise in einen Rahmen eingebaut, der mit den als Führungshülsen ausgebildeten Führungsgliedern 18 verbunden wird.

Die Führungshülsen 18 sind an der Bodenfläche der Kühltruhe 2 koaxial zu den Stützen 17 befestigt und können zusätzlich durch einen Querholm 34 versteift sein.

Eine weitere Möglichkeit zur stufenlosen Höhenverstellung der Kühltruhe 2 ist in den Fig. 6 und 7 angedeutet. Hier dient je eine auf gegenüberliegenden Seiten des Fußrahmens 14 lotrecht angebrachte Gasdruckfeder 30 der Auf- und Abbewegung der Kühltruhe, wobei die Stützen 17 mit außen glatten Flächen ausgestattet werden, auf denen glatte Innenflächen der Führungshülsen 18 gleiten. Die Kraft der Gasdruckfedern wird so bemessen, daß sie um etwa 50 bis 100 N größer als die zu bewegende Masse der Kühltruhe 2 ist.

Solche Gasdruckfedern können auch zusätzlich zu den Verstelleinrichtungen mit Gewindespindeln und -muffen (Fig. 4 und 5) bzw. mit Zahnrädern und -stangen (Fig. 6 und 7) vorgesehen werden, wodurch der Antrieb etwas leichter ausgebildet werden kann und auch der Kraftaufwand zur Bewegung der Kühltruhe herabgesetzt wird.

Bei der Anwendung von Gasdruckfedern allein zur Verstellung der Kühltruhe ist eine diese in ihrer Höhenlage haltende Arretiervorrichtung 31 mit einem Fußhebel 32 zum Lösen bzw. Festlegen der Arretierung notwendig, im Falle der fakultativen Anwendung von Gasdruckfedern zusätzlich zu motorisch oder manuell betätigten Antriebsgliedern kann eine Arretiervorrichtung von Vorteil sein.

## Patentansprüche

1. Kryostatmikrotom mit einer durch ein Kälteaggregat auf eine vorbestimmte Temperatur einstellbaren Kühltruhe (2), die auf einem Ständer aufgenommen ist, und mit einem in dieser Kühltruhe angeordneten Mikrotom (7), dadurch gekennzeichnet, daß die Kühltruhe (2) mit dem Mikrotom (7) auf dem Ständer höhenverstellbar aufgenommen ist, wobei der Ständer aus einem Fußrahmen (14) und einem mit diesem sowie mit der Kühltruhe (2) verbundenen Gestell (13) aus relativ zueinander bewegbaren Bauteilen besteht, daß der Fußrahmen (14) lotrechte Stützen (17') trägt, und daß wenigstens zwei an einander gegenüberliegenden Seiten des Fußrahmens (14) angeordnete Stützen (17') als um ihre Längsachse drehbare Gewindespindeln ausgebildet sind, die mit von der Bodenfläche der Kühltruhe (2) beabstandeten, mit der Kühltruhe (2) starr verbundenen Gewindemuffen (18') in Eingriff sind und an ihrem unteren Ende die Gewindespindeln gleichzeitig in Umdrehung versetzende Antriebsräder (19) tragen.

2. Mikrotom nach Anspruch 1, dadurch gekennzeichnet, daß am Fußrahmen (14) eine in ihrer Drehrichtung umkehrbare Antriebsquelle (21) befestigt ist, deren Antriebswelle antriebsseitig mit den Antriebsrädern (19) verbunden ist.

3. Mikrotom nach Anspruch 1, dadurch gekennzeichnet, daß vier lotrechte Stützen (17') als Gewindespindeln ausgebildet und mit von der Bodenfläche der Kühltruhe beabstandeten, mit der Kühltruhe starr verbundenen Gewindemuffen (18') in Eingriff sind, daß jede Gewindespindel an ihrem unteren Ende ein die Spindel in Umdrehung versetzendes Kettenrad (19) trägt und daß über die vier Kettenräder eine endlose Antriebskette (20) geführt ist, die mit einem an der Antriebswelle einer in ihrer Drehrichtung umkehrbaren Antriebsquelle (21) befestigten Kettenrad (22) ein Eingriff ist.

4. Kryostatmikrotom mit einer durch ein Kälteaggregat auf eine vorbestimmte Temperatur einstellbaren Kühltruhe (2), die auf einem Ständer aufgenommen ist, und mit einem in dieser Kühltruhe angeordneten Mikrotom (7), dadurch gekennzeichnet, daß die Kühltruhe (2) mit dem Mikrotom (7) auf dem Ständer höhenverstellbar aufgenommen ist, wobei der Ständer aus einem Fußrahmen (14) und einem mit diesem sowie mit der Kühltruhe (2) verbundenen Gestell (13) aus relativ zueinander bewegbaren Bauteilen besteht, daß der Fußrahmen (14) lotrechte Stützen (17) trägt, daß wenigstens zwei an einander gegenüberliegenden Seiten des Fußrahmens (14) angeordnete Stützen (17) an ihrer Außenfläche eine parallel zur Stützenlängsachse verlaufende Zahnstange (23) tragen, mit der je ein von der Bodenfläche der Kühltruhe (2) beabstandetes, an der Kühltruhe (2) mit ortsfester Achse gelagertes Zahnrad (24) in Eingriff ist, und daß die Zahnräder mit einer in ihrer Drehrichtung umkehrbaren Antriebsquelle (21) verbunden sind.

5. Mikrotom nach Anspruch 4, dadurch gekennzeichnet, daß vier lotrechte Stützen (17) vorgesehen sind, die an ihren Außenflächen die jeweils mit einem Zahnrad (24) kämmenden Zahnstangen (23) tragen, und daß die Antriebsquelle (21) die vier Zahnräder (24) gleichzeitig in Umdrehung versetzt.

6. Mikrotom nach Anspruch 5, dadurch gekennzeichnet, daß jedes mit einer Zahnstange (23) kämmende Zahnrad (24) mit einem Kettenrad (25, 28) drehfest verbunden ist, wobei je zwei auf der gleichen Seite des Fußrahmens angeordnete Kettenräder (25, 28) über eine endlose Antriebskette (26, 29) und zwei auf gegenüberliegenden Seiten des Fußrahmens befindliche Kettenräder (25, 28) durch eine Welle (27) verbunden sind.

7. Mikrotom nach Anspruch 5 oder 6, dadurch gekennzeichnet, daß die vier Zahnräder (24) und die diese antriebsseitig verbindenden Glieder (25, 26, 27, 28, 29) sowie die Antriebsquelle (21) an einem Rahmen gehalten sind, der mit die Stützen (17) übergreifenden, an der Kühltruhe befestigten Hülsen (18) verbunden ist.

8. Mikrotom nach einem der vorhergehenden Ansprüche, dadurch gekennzeichnet, daß zwischen den Fußrahmen (14) und die Kühltruhe (2) zwei einander gegenüberliegende Gasdruckfedern (30) eingeschaltet sind, deren Kraft größer als die zu bewegende Masse der Kühltruhe (2) ist.

9. Mikrotom nach einem der Ansprüche 1 bis 8, gekennzeichnet durch eine die Lage der Kühltruhe (2) in der gewünschten Höhe festlegende Arretiervorrichtung (31, 32).

## Claims

1. Cryostatic microtome having a low-temperature cooling chest (2) which can be set by a refrigerating unit to a predetermined temperature and is located on a stand and a microtome (7) arranged in this low-temperature cooling chest, characterised in that the low-temperature cooling chest (2), together with the microtome (7), is located in a vertically adjustable manner on the stand, with the stand consisting of a base frame (14) and a pedestal (13) connected to the latter and to the low-temperature cooling chest (2) and made of components which can move relative to one another, that the base frame (14) carries vertical supports (17'), and that at least two supports (17'), arranged on opposite sides of the base frame (14), are made as threaded spindles which can rotate about their longitudinal axis and are in engagement with threaded sleeves (18'), positioned at a distance from the base surface of the low-temperature cooling chest (2) and rigidly connected to the latter, and, at their lower end, carry drive wheels (19) which simultaneously set the threaded spindles in rotation.

2. Microtome according to Claim 1, characterised in that a drive source (21) which is reversible in its rotary direction is fixed to the base frame (14), the drive shaft of which drive source (21) is connected on the drive side to the drive wheels (19).

3. Microtome according to Claim 1, characterised in that four vertical supports (17') are made as threaded spindles and are in engagement with threaded sleeves (18') located at a distance from the base surface of the low-temperature cooling chest and rigidly connected to the latter, that each threaded spindle, at its lower end, carries a chain wheel (19) which sets the spindle in rotation, and that an endless drive chain (20) is led over the four chain wheels, which endless drive chain (20) is in engagement with a chain wheel (22) fixed to the drive shaft of a drive source (21) which is reversible in its rotary direction.

4. Cryostatic microtome having a low-temperature cooling chest (2) which can be set by a refrigerating unit to a predetermined temperature and is located on a stand and a microtome (7) arranged in this low-temperature cooling chest, characterised in that the low-temperature cooling chest (2), together with the microtome (7), is located in a vertically adjustable manner on the stand, with the stand consisting of a base frame (14) and a pedestal (13) connected to the latter and to the low-temperature cooling chest (2) and made of components which can move relative to one another, that the base frame (14) carries vertical supports (17), that at least two supports (17) arranged on opposite sides of the base frame (14), at their outer surface, carry a gear rack (23) which runs parallel to the support longitudinal axis and with which a gear wheel (24) is in each case in engagement, which gear wheel (24) is located at a distance from the base surface of the low-temperature cooling chest (2) and is mounted by a fixed axis to the latter, and that the gear wheels are connected to a drive source (21) which is reversible in its rotary direction.

5. Microtome according to Claim 4, characterised in that four vertical supports (17) are provided which, at their outer surfaces, carry the gear racks (23) which each mesh with a gear wheel (24), and that the drive source (21) simultaneously sets the four gear wheels (24) in rotation.

6. Microtome according to Claim 5, characterised in that each gear wheel (24) meshing with a gear rack (23) is non-rotationally connected to a chain wheel (25, 28), with in each case two chain wheels (25, 28) arranged on the same side of the base frame being connected via an endless drive chain (26, 29) and two chain wheels (25, 28) located on opposite sides of the base frame being connected by a shaft (27).

7. Microtome according to Claim 5 or 6, characterised in that the four gear wheels (24) and the members (25, 26, 27, 28, 29), connecting these gear wheels (24) on the drive side, as well as the drive sourve (21) are held on a frame which is connected to sleeves (18) gripping over the supports (17) and fixed to the low-temperature cooling chest.

8. Microtome according to one of the preceding claims, characterised in that two oppositely located pneumatic compression springs (30) are inserted between the base frame (14) and the low-temperature cooling chest (2), the force of which pneumatic compression springs (30) is greater than the mass of the low-temperature cooling chest (2) to be moved.

9. Microtome according to one of Claims 1 to 8, characterised by a locking device (31, 32) fixing the position of the low-temperature cooling chest (2) at the required height.

## Revendications

1. Microtome cryostatique comprenant un congélateur-bahut pouvant être réglé sur une température prédéterminée par une installation frigorifique, ce bahut étant disposé sur un support et comprenant un microtome monté dans ce congélateur-bahut, caractérisé en ce que le congélateur-bahut (2) comprenant le microtome (7) est monté de façon réglable en hauteur sur le support, ce support étant constitué par un châssis de base (14) et par une monture (13) reliée à ce châssis ainsi qu'au congélateur-bahut (2) et constitué par des éléments mobiles les uns par rapport aux autres, que le châssis de base (14) comprend des appuis verticaux (17'), et qu'au moins deux appuis (17') disposés sur les côtés apposés du châssis de base (14) sont constitués sous forme de broches filetées pouvant tourner autour de leur axe longitudinal, en prise avec des manchons filetés (18') à une certaine distance de la surface de fond du congélateur-bahut (2) et rigidement solidaires du congélateur-bahut et qu'à leur extrémité inférieure, les broches filetées supportent des roues d'entraînement (19) pouvant être entraînées en rotation.

2. Microtome selon la revendication 1, caractérisé en ce qu'au châssis de base (14) est fixée une source d'entraînement (21) dont le sens de rotation est inversable et dont l'arbre d'entraînement est relié du côté entraînement aux roues d'entraînement (19).

3. Microtome selon la revendication 1, caractérisé en ce que quatre appuis verticaux (17') sont constitués sous forme de broches filetées et sont en prise avec des manchons filetés (18') situés à une certaine distance de la surface de fond du congélateur-bahut et sont solidaires de ce congélateur-bahut, que chaque broche filetée porte à son extrémité inférieure une roue à chaîne (19) entraînant les broches en rotation, et que sur les quatre roues à chaîne passe une chaîne d'entraînement sans fin (20) qui est en prise avec une roue à chaîne (22) montée sur l'arbre d'entraînement d'une source d'entraînement (21) dont le sens de rotation est inversable.

4. Microtome cryostatique comprenant un congélateur-bahut (2) pouvant être réglé sur une température prédéterminée par une installation frigorifique, qui est monté sur un support et qui comprend un microtome disposé dans ce congélateur-bahut (7), caractérisé en ce que le congélateur-bahut (2) contenant le microtome (7) est monté réglable en hauteur sur le support, ce support étant constitué par un châssis de base (14) et par une monture (13) comportant des éléments mobiles les uns par rapport aux autres et reliée au châssis de base ainsi qu'au congélateur-bahut (2), que le châssis de base (14) supporte des appuis verticaux (17), qu'au moins deux appuis (17) disposés sur les côtés opposés du châssis de base (14) supportent sur leur surface externe une crémaillère (23) parallèle à l'axe longitudinal des appuis, avec chacune desquelles est en prise une roue dentée (24) située à une certaine distance de la surface de fond du congélateur-bahut (2) et montée par un axe fixe sur le congélateur-bahut (2), et que les roues dentées sont reliées à une source d'entraînement (21) dont le sens de rotation peut être inversé.

5. Microtome selon la revendication 4, caractérisé en ce que sont prévus quatre appuis verticaux (17) qui supportent sur leurs surfaces externes les crémaillères (23) qui engrènement respectivement avec une roue dentée (24), et que la source d'entraînement (21) entraîne en rotation les quatre roues dentées (24) simultanément.

6. Microtome selon la revendication 5, caractérisé en ce que chaque roue dentée (24) qui engrène avec une crémaillère (23) est montée solidaire en rotation avec une roue à chaîne (25, 28), deux roues à chaîne (25, 28) disposées respectivement sur le même côté du châssis de base étant reliées par une chaîne d'entraînement sans fin (26, 29) et deux roues à chaîne (25, 28) disposées sur les côtés opposés du châssis de base étant reliées par un arbre (27).

7. Microtome selon la revendication 5 ou 6, caractérisé en ce que les quatre roues dentées (24) et les éléments (25, 26, 27, 28, 29) reliant ces dernières à l'entraînement, ainsi que la source d'entraînement (21), sont montés dans un châssis qui est relié aux manchons (18) recouvrant les appuis (17) et fixés au congélateur-bahut.

8. Microtome selon l'une quelconque des revendications précédentes, caractérisé en ce qu'entre le châssis de base (14) et le congélateur-bahut (2) sont incorporés deux amortisseurs pneumatiques opposés (30) dont la force est supérieure à la masse du congélateur-bahut (2) à déplacer.

9. Microtome selon l'une quelconque des revendications 1 à 8, caractérisé par un dispositif de blocage (31, 32) fixant la position du congélateur-bahut (2) à la hauteur désirée.

Fig. 1

Fig. 2

Fig. 3

Fig. 4

Fig. 5

**Fig. 6**

**Fig. 7**